# EUROPEAN PATENT APPLICATION

(11) **EP 1 800 948 A1**
(43) Date of publication of application: **27.06.2007**
(21) Application number: 06125366.2
(22) Date of filing: 04.12.2006
(51) Int. Cl.: B60Q 1/12, B60Q 1/18

(54) **Adaptive front lighting for vehicles**

(30) Priority: 22.12.2005 GB 0526113
(71) Applicant: Nissan Motor Manufacturing (UK) Ltd., Cranfield, Bedfordshire MK43 0DB (GB)
(72) Inventor: Russell-Smith, Ben Nissan Technical Centre Europe, Mousloe Cranfield, Bedfordshire MK43 0DB (GB)
(74) Representative: Hufton, Victoria Alice

(57) **Abstract**

An adaptive front lighting system for a vehicle comprises light sources having fixed bending light functionality, a controller being programmed selectively to cause a light source to emit light to one or other side of the vehicle corresponding to the steering direction and in accordance with steering angle. The controller stores different illumination profiles that determine operation of the selected light source relative to steering angle, an appropriate profile being selected in accordance with other data input to the controller. With vehicle speed data input, the controller can select an illumination profile that suits the speed of the vehicle. With user input, the controller can select an illumination profile preferred by the user.

## Description

This invention relates to adaptive front lighting for vehicles.

It has long been recognised that it is desirable to direct vehicle headlamps in accordance with the direction of a turn being taken, or to be taken, by the vehicle. This 'bending light' technology has been in practical use, albeit sporadically, for at least half a century.

Historically, vehicles with adaptive front lighting have relied upon 'dynamic bending light' solutions. Those solutions are characterised by light sources such as headlamp reflectors that are pivotally mounted to swivel about an upright pivot axis, being movable around that axis by actuators or motors under automatic control. The basic principle is that the headlamp beam angle with respect to the central longitudinal axis of the vehicle is proportional to vehicle steering input, from which the radius of the bend being taken by the vehicle can be inferred.

In recent years, dynamic bending light technology has been applied successfully to xenon projector lighting and, with greater legislative freedom in Europe enabled by more sophisticated control logic, it has enjoyed more widespread acceptance than in the past. In current arrangements, offered by Valeo and Hella for example, motor-driven xenon projector units can pivot 15-20° from the central longitudinal axis of the vehicle. This suits gentle large-radius curves that can be taken at medium to high speed. A drive-motor control unit runs a control algorithm that infers vehicle steering angle from the driver's steering wheel input; moreover, to modify projector movement to suit lower speeds while avoiding dazzle to oncoming drivers, the control algorithm may also be responsive to vehicle speed, as usually determined by wheel speed sensors also used by the vehicle's ABS system. It is even possible to control the angle of nearside and offside projector units independently such that, for example, the inner projector unit nearer the inside of a curve turns more than the other projector unit on the outside of the curve. Similar principles can be applied to halogen reflector lighting, as has been proposed by Visteon for lower-cost vehicles.

Another adaptive lighting solution now permitted by European legislation employs 'fixed bending light' (FBL) technology, also offered by Valeo and others. This technology involves activating an auxiliary lamp to enhance visibility in sharp small-radius curves taken at low to medium speed. To this end, an auxiliary lamp is typically integrated into each headlamp cluster of a vehicle in a heavily offset orientation to direct light laterally and outwardly at approximately 35-45° with respect to the central longitudinal axis of the vehicle. The auxiliary lamp on the inside of a turn illuminates as necessary. That is to say, an auxiliary lamp in the offside headlamp cluster emits light to the offside of the vehicle when the vehicle is turning right, while an auxiliary lamp in the nearside headlamp cluster emits light to the nearside of the vehicle when the vehicle is turning left. In right-hand-drive vehicles, nearside is defined as to the left with respect to the direction of travel of the vehicle and offside is defined as to the right with respect to the direction of travel; the reverse applies in left-hand-drive vehicles.

The auxiliary lamp is typically a halogen lamp but it may be another light source such as a xenon projector or an LED array. It operates under the automatic control of a control unit whose control algorithm takes inputs from a steering angle sensor and from a wheel speed sensor that indicates vehicle speed. In this way, the auxiliary lamp provides additional automatic illumination of sharp curves and intersections taken at low to medium speeds, especially when the steering angle is great and the speed is low during low-speed manoeuvring. Preferably the auxiliary lamp does not merely have fully on and off states but can be illuminated with variable intensity between those states, for example by applying variable voltage to the lamp. The auxiliary lamp may even illuminate when the car is stationary and steering lock has been applied in readiness for turning at an intersection or other junction.

The auxiliary lamp should not illuminate when the vehicle is being reversed so as to avoid dazzling or inadvertently signalling other road users. Also, generally speaking, the auxiliary lamp is enabled at low to medium speeds, if steering angle so determines, but is disabled at high speed irrespective of steering angle. Vehicle speed is sensed to determine whether the auxiliary lamp should be enabled at that speed and hence whether the auxiliary lamp should be illuminated at all.

It is possible to employ both dynamic bending light and fixed bending light technologies in the same vehicle, so that the driver can benefit from both solutions when driving at the appropriate speeds. In other words, the control algorithms are such that with suitable steering wheel inputs, the auxiliary lamp illuminates at low to medium speed, and the main reflector or projector swivels at medium to high speed. It is even possible to implement both dynamic bending light and fixed bending light solutions in one headlamp cluster: such clusters are already being fitted to some Porsche vehicles. Together, the technologies aim to enhance visibility when negotiating all kinds of bends, curves, corners or other turns such as intersections.

A problem with current fixed bending light systems is that activation sensitivity is predefined and is independent of vehicle speed. As such, the system performance is a compromise between being too sensitive at low speed, with auxiliary lamps flashing on and off too frequently, and not being sensitive enough at high speed, where the auxiliary lamps may never illuminate because the steering angle input is not sufficient to switch them on.

Against this background, the invention resides in an adaptive front lighting system for a vehicle, the system comprising: first and second light sources situated respectively toward the left and right sides of the vehicle with respect to its normal direction of travel; a turn radius sensor arranged to determine vehicle direction and turn radius; and a controller for controlling the light sources in dependence upon turn radius data from the sensor, the controller being programmed selectively to cause a light source to emit light to one or other side of the vehicle corresponding to the vehicle direction and in accordance with turn radius; wherein the controller stores a plurality of different illumination profiles that determine operation of the selected light source relative to turn radius and wherein the controller selects an appropriate profile in accordance with other data input to the controller.

The turn radius sensor is most conveniently a vehicle steering sensor arranged to determine steering direction and steering angle.

The system of the invention may further comprise a vehicle speed sensor to determine vehicle speed. Such a sensor can employ wheel speed sensors of the vehicle's anti-lock brake system (ABS), although other vehicle speed sensors are possible. By receiving a vehicle speed data input, the controller can modify the operation of the light sources in accordance with vehicle speed in addition to steering data.

Specifically, the vehicle speed data input causes the controller to select an illumination profile that suits the speed of the vehicle. So, in high-speed driving for example, the selected light source may first illuminate at a small steering angle, such as is determined by 10° of steering wheel movement. Conversely if the vehicle is travelling slowly, a different illumination profile is selected such that the selected light source may first illuminate at a large steering angle, such as is determined by 90° of steering wheel movement.

It is also possible for different illumination profiles to have different brightness ramp-up characteristics once the selected light source is illuminated. That is to say, some illumination profiles achieve full brightness of the selected light source after a relatively small steering angle is attained, and others require a greater steering angle to be attained before the light source reaches the same brightness.

Different illumination profiles need not necessarily be selected according to vehicle speed. For example it is possible, either additionally or alternatively, to select different illumination profiles according to user input. In this way, a user may select a 'sport' setting to select an illumination profile for high-speed driving, or a 'town' setting to select an illumination profile appropriate to low-speed manoeuvring. Such settings may be options additional to a 'normal' setting that is a standard compromise as to sensitivity of operation with regard to steering angle. The settings may default to 'normal' when the vehicle engine is switched off.

Preferably, light output from the selected light source, once activated, progressively increases in brightness with increasing steering angle, until it reaches a maximum and so stops increasing even if steering angle further increases. Variable light output may be achieved by applying a variable voltage to the light source or by supplying variable power to the light source, for example by pulse width modulation. The light source is suitably a filament bulb but other light sources such as LEDs or xenon projectors are also possible.

The facility for determining steering angle is preferably used to define a range of steering wheel movement around the straight-ahead position in which neither of the light sources emits light to a side of the vehicle. This prevents unnecessary operation of the light sources due to steering corrections when driving straight ahead, or on very gentle curves where no lateral illumination is required. Different illumination profiles preferably provide for different ranges of steering wheel movement around the straight-ahead position in which neither of the light sources is illuminated.

For simplicity, the light sources are preferably fixed with respect to the vehicle in a development of existing fixed bending light arrangements. However it is conceivable that their direction of illumination with respect to the vehicle could be varied, either under driver control or by the controller, either before driving or in real-time while driving.

In preferred embodiments of the invention, the light sources are auxiliary lamps supplemental to a main lighting system of the vehicle. Typically the main lighting system will employ first and second headlamp clusters toward the left and right sides at the front of the vehicle, those clusters containing main lamps such as xenon projectors which may have dynamic bending light functionality. Elegantly, the auxiliary lamps can be integrated with the respective headlamp clusters, and may be situated outboard or inboard of the main lamps.

The inventive concept also embraces a vehicle fitted with the adaptive front lighting system of the invention.

In order that the invention may be more readily understood, reference will now be made, by way of example, to the accompanying drawings in which:
Figure 1 is a schematic plan view of a vehicle, also serving as a system diagram of an embodiment of the invention to show how auxiliary lamps may be situated in a vehicle and activated;
Figure 2 is a graph showing how voltage may be applied to the auxiliary lamps in the system of Figure 1, in relation to steering angle and speed of the vehicle; and
Figure 3 is a circuit diagram implementing the system of Figure 1 and the voltage supply characteristic of Figure 2.

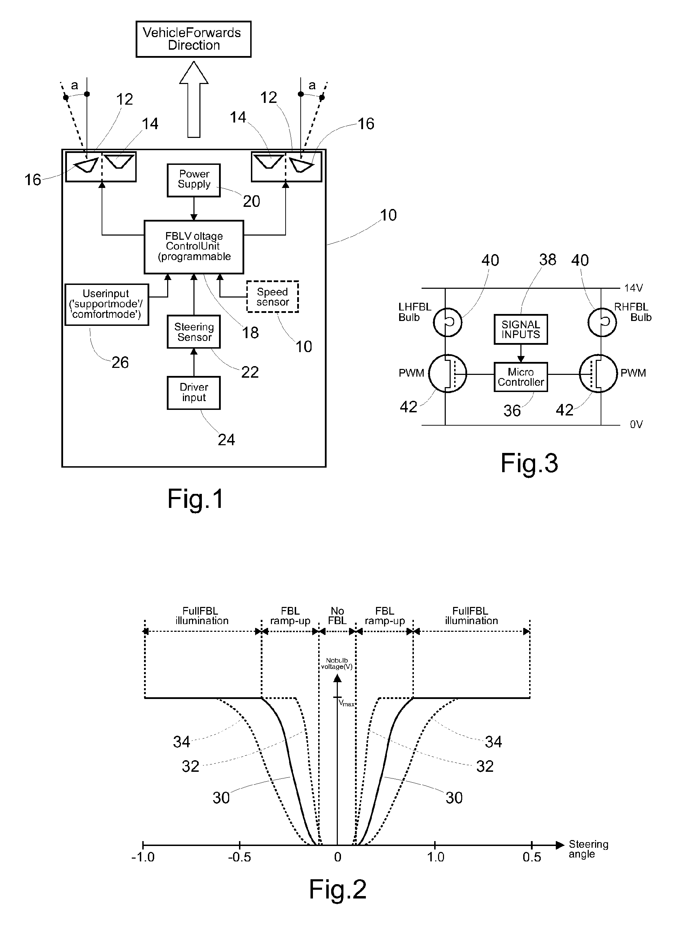

Referring firstly to Figure 1 of the drawings, a vehicle 10 is shown in plan view with the normal direction of travel as shown. The vehicle 10 has a pair of headlamp clusters 12 at its front, one to the nearside and the other to the offside in accordance with long-standing practice and legislation. Each cluster 12 contains a main lamp 14 which in this case is shown as being a fixed reflector for simplicity. However the main lamp 14 could be a projector and could be movable in a dynamic bending light arrangement if desired. Each cluster 12 also contains an auxiliary lamp 16 situated outboard of the main lamp 14 and directed outwardly from that side of the vehicle 10 to emit light to the same side of the vehicle 10 as the associate headlamp cluster 12 . The auxiliary lamps 16 provide fixed bending light functionality.

The beam of each auxiliary lamp 16 is at an angle 'a' with respect to the normal direction of travel of the vehicle 10. That angle may be determined by the manufacturer or there may be an adjustment provision whereby the driver can select a preference in that regard.

Operation of the auxiliary lamps 16 is controlled by a programmable FBL voltage control unit 18 that takes power from a power supply 20 and data inputs from a steering angle sensor 22, a vehicle speed sensor 24 and a user-operated lighting mode selector switch 26. The steering angle sensor 22 is responsive in turn to driver input 28 through the vehicle steering wheel. Whilst not illustrated, the vehicle speed sensor 24 may comprise wheel speed sensors such as those used in the vehicle's anti-lock braking system (ABS).

The FBL voltage control unit 18 is programmed to execute an algorithm that selects an appropriate one of the auxiliary lamps 16 in accordance with steering direction. The algorithm then illuminates the selected lamp 16 with an intensity that depends upon (i) the steering angle and also (ii) at least one of the inputs from the vehicle speed sensor 24 and the lighting mode selector switch 26, i.e. the parameters of vehicle speed and/or the user-selected lighting mode. It must be emphasised here that the invention in its broadest sense is not limited to use of both of these parameters, which are described in the same embodiment simply for ease of illustration. It is possible that only vehicle speed, or only the user-selected lighting mode, or indeed another parameter, is used by the FBL voltage control unit 18 in conjunction with steering angle to determine the response of the auxiliary lamps.

A typical relationship between steering angle and intensity of illumination of the auxiliary lamps 16 is shown in Figure 2 of the drawings. The graph of Figure 2 plots voltage applied to the auxiliary lamps 16 on the vertical axis against steering angle expressed on the horizontal axis. A negative steering angle on the horizontal axis of the graph indicates that left steering lock is applied, hence selecting the auxiliary lamp 16 in the offside headlamp cluster 12, whereas a positive steering angle indicates that right steering lock is applied, hence selecting the auxiliary lamp 16 in the nearside headlamp cluster 12.

It will be noted from Figure 2 that there is no illumination of either auxiliary lamp 16 where the steering wheel is within a small range of movement either side of straight-ahead:
no voltage (V₀) is then applied to either auxiliary lamp. This helps to prevent unnecessary and distracting operation of the auxiliary lamps 16 due to normal steering corrections when driving straight ahead or on very gentle curves. Increasing steering angle increases the voltage applied to the selected auxiliary lamp 16 to switch it on with progressively increasing brightness until voltage, and hence brightness, reaches Vₘₐₓ and then plateaus.

The voltage ramp-up characteristic with respect to steering angle may be determined by the manufacturer or there may be an adjustment provision whereby the driver can select a preference in that regard. Moreover, by means of the invention, different voltage ramp-up characteristics may be selected automatically with reference to parameters such as either, or both, of the vehicle speed and the user-selected lighting mode. This is an example of how different illumination characteristics can be selected in accordance with the invention, for example in accordance with vehicle speed and/or user preference.

Specifically, the graph in Figure 2 shows three curves corresponding to illumination response in relation to steering angle, each curve being mirrored on the other side of the straight-ahead steering position. Their characteristics are as follows:

The first curve 30, shown in a solid line, illustrates a moderate illumination response characterised by a medium V₀ range and a moderate ramp-up to Vₘₐₓ. In this regime, the selected auxiliary lamp 16 first illuminates reasonably quickly, i.e. when the steering wheel is turned a small angle from the straight ahead, but then increases in brightness quite slowly with increasing steering angle. This regime may be selected in response to user selection of a 'comfort' mode, and/or in response to travel at medium speeds.

Where user-selectable, comfort mode may be regarded as a normal default setting appropriate to most driving conditions, such that the system may default automatically to that mode when the vehicle engine is switched off.

The second curve 32, shown in a dashed line, illustrates a fast illumination response characterised by a small V₀ range and a steep ramp-up to Vₘₐₓ. In this regime, the selected auxiliary lamp 16 first illuminates very quickly, i.e. when the steering wheel is turned only slightly from the straight ahead, for example greater than 10°, and then quickly increases in brightness with increasing steering angle. This regime may be selected in response to user selection of a 'sport' mode, and/or in response to travel at high speeds. In that regime, fast response is important so that lateral illumination from auxiliary lamp 16 is available on demand as the driver follows a challenging road at speed.

Where user-selectable, sport mode may be regarded as a special setting that reverts to the normal default setting of curve 30 when the vehicle engine is switched off.

The third curve 34, also shown in a dashed line, illustrates a slow illumination response characterised by a large V₀ range and a slow, relatively shallow ramp-up to Vₘₐₓ. In this regime, the selected auxiliary lamp 16 first illuminates slowly, i.e. when the steering wheel is turned a considerable amount, and then increases in brightness slowly with increasing steering angle. This regime may be selected in response to user selection of a 'town' mode, and/or in response to travel at low speeds. In such circumstances where the steering angle will tend to fluctuate sharply as the vehicle manoeuvres, it is desirable to avoid operation of either auxiliary lamp 16 until a large steering angle, for example greater than 90°, makes it clear that a particular auxiliary lamp 16 is needed for lateral illumination. It is also desirable to avoid unnecessary operation of the auxiliary lamps 16 in case fellow road users wrongly believe that they are being signalled by their fluctuating light output.

Where user-selectable, town mode may also be regarded as a special setting that reverts to the normal default setting of curve 30 when the vehicle engine is switched off.

The circuit diagram of Figure 3 shows that the FBL voltage control unit 18 contains a microcontroller 36 programmed to respond to signal inputs 38 as aforesaid to control power supplied to the bulbs 40 of the auxiliary lamps 16 by virtue of respective pulse width modulator circuits 42. Instead of pulse width modulation, it is also possible to employ variable resistors to apply variable voltage across the auxiliary lamps.

Many variations are possible within the inventive concept. For example, it is possible for operation of the auxiliary lamps 16 to be determined by a look-up table stored in the FBL voltage control unit 18, that table listing control responses appropriate to various combinations of steering angle, vehicle speed and/or user-selected lighting mode. It is also possible that regimes of operation of the auxiliary lamps 16 may be selected in accordance with other parameters such as satellite navigation data indicating the nature of the road ahead, or by reference to driving style at that time, such as the rate of change of steering angle and the frequency or magnitude of steering wheel movements. It may also be significant to know whether the driver has selected main beam or dipped beam for the main lamps, from which it can be inferred whether operation of the auxiliary lamps may be needed by the driver or may inconvenience other road users, especially oncoming traffic.

As noted in Figure 1, the auxiliary lamps need not necessarily be situated in the clusters that contain the main lamps: they could be separate units. They could even be mounted elsewhere on the vehicle provided that they are toward the sides of the vehicle and preferably as far forward as possible to make the most favourable beam direction with respect to bends being taken.

It is possible within the ambit of the invention to reverse the normal arrangement by illuminating the auxiliary lamp that is further from the centre of curvature of the bend; this reduces dazzle due to adjacent obstructions on the inside of the bend, and helps to maintain the spread and range of the light output. In other words, a light source situated toward the left side of the vehicle may be arranged to emit light to the right side of the vehicle, and a light source situated toward the right side of the vehicle may be arranged to emit light to the left side of the vehicle.

Vehicle speed can be determined in ways other than measuring wheel speed, for example by reference to global-positioning systems used in satellite navigation.

A possible alternative to a steering angle sensor for sensing turn radius would be a yaw rate sensor to determine vehicle attitude as it negotiates a turn. As the amount of lean or roll as the vehicle corners would be dependant on both vehicle speed and bend curvature, a single yaw rate sensor could, in theory, remove the need for separate speed and steering angle sensors.

These and other possible variations mean that reference should be made to the appended claims rather than to the foregoing specific description in determining the scope of the invention.

## Claims

1. An adaptive front lighting system for a vehicle, the system comprising:
first and second light sources situated respectively toward the left and right sides of the vehicle with respect to its normal direction of travel;
a vehicle steering sensor arranged to determine steering direction and steering angle; and
a controller for controlling the light sources in dependence upon turn radius data from the sensor, the controller being programmed selectively to cause a light source to emit light to one or other side of the vehicle corresponding to the vehicle direction and in accordance with turn radius;
wherein the controller stores a plurality of different illumination profiles that determine operation of the selected light source relative to turn radius;
wherein the controller selects an appropriate profile in accordance with other data input to the controller; and
wherein the illumination profiles include a profile in which the selected light source illuminates at a relatively small steering angle, and another profile in which the selected light source illuminates at a relatively large steering angle.

2. The system of Claim 1, wherein the illumination profiles include a profile in which the brightness of the light output from the selected light source increases relatively quickly with increasing steering angle once illuminated, and another profile in which the brightness of the selected light source increases relatively slowly with increasing steering angle once illuminated.

3. The system of Claim 1 or Claim 2, wherein a range of steering wheel movement around the straight-ahead position is defined in which neither of the light sources emits light to a side of the vehicle.

4. The system of any preceding Claim, further comprising a vehicle speed sensor including wheel speed sensors of a vehicle anti-lock brake system to determine vehicle speed.

5. The system of Claim 4, wherein the controller modifies the operation of the light sources in accordance with vehicle speed.

6. The system of Claim 5, wherein vehicle speed data input causes the controller to select an illumination profile that suits the speed of the vehicle.

7. The system of any preceding claim, wherein user input causes the controller to select an illumination profile preferred by the user.

8. The system of Claim 7, wherein user input selects modes of operation that determine selection of illumination profiles, the modes reverting to a normal mode upon switching off the vehicle engine.

9. The system of any preceding claim, wherein the light sources are auxiliary lamps supplemental to a main lighting system of a vehicle;
wherein the main lighting system employs first and second headlamp clusters toward the left and right sides at the front of the vehicle, those clusters containing main lamps; and
wherein the main lamps have dynamic bending light functionality.

10. The system of Claim 9, wherein the auxiliary lamps are integrated with the respective headlamp clusters.

11. A vehicle fitted with the adaptive front lighting system of any preceding claim.
